# EUROPÄISCHE PATENTANMELDUNG

(11) **EP 1 130 830 A2**
(43) Veröffentlichungstag der Anmeldung: **05.09.2001**
(21) Anmeldenummer: 01810075.0
(22) Anmeldetag: 26.01.2001
(51) Int. Cl.: H04B 10/18

(54) **Verfahren zur Datenübertragung über einen dispersiven Lichtwellenleiter**

(30) Priorität: 21.02.2000 DE 10007823
(71) Anmelder: ABB Power Automation AG, 5400 Baden (CH)
(72) Erfinder: Koller, Erwin, 8810 Horgen (CH)
(74) Vertreter: ABB Patent Attorneys

(57) **Zusammenfassung**

Die vorliegende Erfindung betrifft ein Verfahren zur Übertragung binärer Daten mit einer Rate von R Bits pro Sekunde über einen Lichtwellenleiter der Länge d. Ein Sender erzeugt Pulse einer Dauer τ, welche deutlich kürzer als die zur Rate R gehörige Bitperiode 1/R ist. Aufgrund der dispersiven Eigenschaften des Lichtwellenleiters werden diese Pulse auf ihrem Weg zum Empfänger auf einen Wert verbreitert, welcher annähernd gleich der Bitperiode 1/R ist. Ein Vorteil besteht darin, dass man zur Erzielung einer hohen Übertragungsdistanz d nicht à priori auf einen Laser mit geringer Spektralbreite angewiesen ist.

## Beschreibung

### TECHNISCHES GEBIET

Die vorliegende Erfindung bezieht sich auf das Gebiet der Kommunikation über grosse Distanzen mittels Lichtwellenleiter. Sie betrifft ein Verfahren zur Datenübertragung gemäss dem Oberbegriff des Patentanspruchs 1.

### STAND DER TECHNIK

Eine aktuelle Übersicht über das Gebiet der faseroptischen Telekommunikation findet sich in Kapitel 71.2 "Long Distance Fiber Optic Communications" des "Electrical Engineering Handbook" (Edited by R.Dorf, CRC Press LLC, 1999, p. 1584-1591). Die digitale Übertragung binärer Daten mittels lasererzeugten Lichtpulsen in Lichtwellenleitern ist bei Datenraten von einigen 10 Mbps über Distanzen von einigen 10 km problemlos möglich. Systeme zur faseroptischen Datenübertragung umfassen einen Sender mit einer Lichtquelle (Laserdiode), einen Lichtwellenleiter (Glasfaserkabel) und einen Empfänger mit einem Lichtdetektor (Photodiode). Die Dämpfung der optischen Pulse im Lichtwellenleiter beschränkt die maximale Übertragungsdistanz, bei einer Lichtwellenlänge von 1550 nm ist diese Dämpfung minimal.

Die genannten Systeme sind durch ein sogenanntes "bit rate-distance product" oder "bandwidth-distance product" charakterisiert, dies bedeutet, dass eine grosse Übertragungsdistanz mit einer geringen maximalen Übertragungsrate (Bandbreite) korreliert ist. Ein Grund für die Abnahme der Bandbreite des Lichtwellenleiters mit seiner Länge sind die dispersiven Eigenschaften der meisten Glasfasern. In den bevorzugt eingesetzten Single-Mode Fasern ist die wichtigste Dispersion chromatischen Ursprungs und durch wellenlängenabhängige Brechungsindizes und Ausbreitungscharakteristiken verursacht. Ein nicht-monochromatischer Lichtpuls aus einer Quelle mit einer endlichen Spektralbreite wird dadurch auf seinem Weg durch den Lichtwellenleiter verbreitert.

Eine derartige Pulsverbreiterung Δτ bei einer Wellenleiterlänge d ist gegeben durch Δτ = M·d·Δλ. Dabei bezeichnet Δλ die Spektralbreite der Lichtquelle. Der Dispersionsfaktor M von vielen bis heute verlegten Single-Mode Fasern beträgt ungefähr 18 Picosekunden pro Nanometer Spektralbreite (Δλ) und pro Kilometer Faserlänge (d) bei Wellenlängen um 1550 nm.

Bei einer Übertragungsrate von R Bits pro Sekunde wird pro Bit entweder ein oder kein Puls mit einer Pulsbreite, welche gleich der Bitperiode 1/R ist, gesendet. Eine Pulsverbreiterung Δτ von über 50% der ursprünglichen Pulsbreite führt zu Interferenzen beim Empfänger und Übertragungsfehlern, da in diesem Fall der verbreiterte Puls zu stark in die Bitperiode des nachfolgenden Bits hineinreicht.

Eine Vergrösserung der Übertragungsdistanz d bei gleichbleibender Übertragungsrate R, d.h. gleichbleibender Bitperiode und maximal tolerierbarer Pulsverbreiterung, bedingt also eine Reduktion der Dispersion. Diese umfasst einerseits eine aktive Kompensation, beispielsweise indem Abschnitte der Faser aus Lichtwellenleitern mit einem negativen Dispersionsfaktor ausgebildet werden, oder indem die Pulse durch den Sender absichtlich in einer bestimmten Art und Weise verzerrt werden. Andererseits können auch monochromatischere und entsprechend teurere Lichtquellen, d.h. Halbleiterlaser mit kleinerer Spektralbreite, eingesetzt werden.

### DARSTELLUNG DER ERFINDUNG

Aufgabe der vorliegenden Erfindung ist es, ein Verfahren anzugeben, welches es ermöglicht, eine infolge dispersiver Effekte des Lichtwellenleiters beschränkte maximale Übertragungsdistanz eines faseroptischen Datenübertragungssystems zu erhöhen. Diese Aufgabe wird durch ein Verfahren mit den Merkmalen des Patentanspruchs 1 gelöst.

Kern der Erfindung ist es, die Pulsbreite der erzeugten Lichtpulse zu reduzieren auf einen Wert, welcher kleiner ist als die zur gewählten Rate gehörige Bitperiode. Die dispersionsinduzierte Verbreiterung des Pulses wird nicht reduziert, sondern ausgenutzt, um beim Empfänger Pulse mit einer Breite annähernd gleich der Bitperiode zu erhalten.

Beim Empfänger haben also sowohl die ankommenden Lichtpulse als auch die Pausen dazwischen dieselbe Zeitdauer. Dadurch können die Anforderungen an den Empfänger reduziert werden. Gleichzeitig ergibt sich die Möglichkeit, auf teure Laser mit kleiner Spektralbreite zu verzichten.

In einer bevorzugten Ausführungsform des erfindungsgemässen Verfahrens hat eine beim Empfänger ankommende Pulsfolge die Form eines NRZ Signals.

Weitere vorteilhafte Ausführungsformen gehen aus den abhängigen Patentansprüchen hervor.

### KURZE BESCHREIBUNG DER FIGUREN

Nachfolgend wird die Erfindung anhand von Ausführungsbeispielen im Zusammenhang mit den Zeichnungen näher erläutert. Es zeigen
Fig.1 ein System zur faseroptischen Datenübertragung
Fig.2 Signale einer zu übermittelnden Bitfolge an verschiedenen Stellen des Systems.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

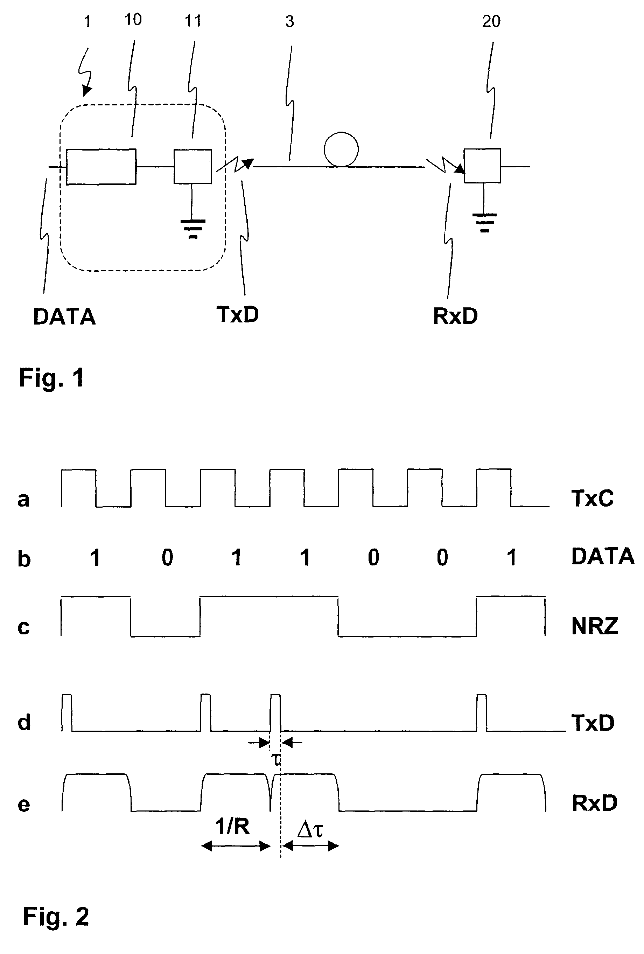

In Fig. 1 ist ein System zur faseroptischen Datenübertragung dargestellt, welches einen Sender 1, einen Empfänger 2 und zwischen Sender 1 und Empfänger 2 einen Lichtwellenleiter 3 der Länge d umfasst. Zum Sender 1 gehören ein Modulator 10 und eine Lichtquelle 11, vorzugsweise eine Laserdiode, welche vom Modulator 10 angesteuert wird und Lichtpulse erzeugt. Letztere werden durch den Lichtwellenleiter 3 zum Empfänger 2 geleitet und dort von einem Lichtdetektor 20, vorzugsweise einer Photodiode, detektiert. An den Detektor anschliessend ist normalerweise ein in Fig.1 nicht gezeigter Verstärker vorgesehen. Der Lichtwellenleiter 3 ist beispielsweise ein Glasfaserkabel und weist gewisse durch einen Dispersionsfaktor M charakterisierte dispersive Eigenschaften auf.

In Fig.2 ist auf einer Zeitachse dargestellt, welche Form eine zu übertragende Bitfolge, wie sie beispielsweise aus einer Puls-Code Modulation (PCM) resultiert, an den in Fig.1 entsprechend gekennzeichneten Stellen (DATA, TxD, RxD) annimmt. In Zeile a) ist der Taktgeber des Senders (Transmitter Clock TxC) aufgezeichnet und in Zeile b) ist ein beliebiges *logisches* Signal (DATA) als Folge von "1" oder "0"-Bits definiert. Diese Bitfolge (DATA) kann *physikalisch* beispielsweise als NRZ-Signal (Nonreturn-To-Zero), d.h. im NRZ Pulsmodulationsformat für binäre Daten, repräsentiert werden (Zeile c). Im NRZ-Format erfährt die modulierte Grösse der Trägerwelle, d.h. bei einer Intensitätsmodulation (On-Off Keying) beispielsweise die Amplitude, zwischen zwei unmittelbar aufeinanderfolgenden "1" oder "0"-Bits keine Änderung.

Angesteuert durch den Pulsmodulator 10 erzeugt die Laserdiode 11 beispielsweise für jedes "1"-Bit einen optischen Puls der Breite τ. Die entsprechende Sendepulsfolge (Transmitted Data TxD) am Ausgang des Senders ist in Zeile d) dargestellt. Jeder einzelne Puls verbreitert sich auf seinem Weg durch den Lichtwellenleiter 3 um den Wert Δτ. Zeile e) zeigt die beim Empfänger 2 detektierte Empfangspulsfolge (Received Data RxD). Letztere hat vorzugsweise zumindest annähernd die Form des unter c) dargestellten, zur Bitfolge b) gehörigen NRZ-Signals.

In der vorliegenden Beschreibung ist mit dem Begriff "Pulsbreite" die zeitliche Dauer τ eines Pulses gemeint, entsprechend bedeutet eine "Verbreiterung" eine zeitliche Verlängerung. Die Pulsbreite ist je nach Form der vorliegenden Lichtpulse bevorzugt in halber Höhe des Pulsmaximums zu bestimmen. Bei einer Übertragungsrate von R Bits pro Sekunde (bps) beträgt die Bitperiode, d.h. die Dauer eines Bits, 1/R Sekunden.

Die Laserdiode 11 weist eine gewisse Spektralbreite Δλ auf, d.h. es werden keine rein monochromatischen Lichtpulse emittiert, sondern Pulse mit Wellenlängen zwischen λ und λ±Δλ/2. Bei den bevorzugt verwendeten Halbleiterlaserdioden vom DFB-Typ (Distributed Feedback), welche bei Datenraten von 155 Mbps bis 10 Gbps operieren, beträgt die Spektralbreite typischerweise 0.1 nm. Letztere kann jedoch bei teuren temperaturstabilisierten Dioden bis auf einige Tausendstels- oder Millionstelsnanometer reduziert sein.

Die durch die Dispersion im Lichtwellenleiter 3 induzierte Verbreiterung Δτ eines ihn durchquerenden Lichtpulses hängt über die bereits genannte Beziehung Δτ = M·d·Δλ von der Lichtwellenleiterlänge d ab. Im Gegensatz dazu ist eine durch die endlichen Ansprechzeiten der Laserdiode 11 und/oder der Photodiode 20 erzeugte Signalverbreiterung nicht von der Länge d abhängig und wird im Folgenden nicht beachtet. Für die vorgesehenen Übertragungsdistanzen von einigen 100 km ist die Dämpfung der Signale nicht limitierend und könnte gegebenenfalls auch durch optische Zwischenverstärker kompensiert werden. Die Reichweitenlimitierung beruht bei den anzustrebenden hohen Übertragungsraten R über das "rate-length product" auf der Wellenleiterdispersion. Bei Single-Mode Fasern und einer Lichtwellenlänge λ von 1550 nm beträgt der erwähnte Dispersionsfaktor M ungefähr 18 ps/km/nm.

Bei bekannten Übertragungsverfahren werden vom Sender symmetrische Pulse mit einer Pulsdauer gleich der Bitperiode 1/R erzeugt, bei einer Übertragungsrate R von beispielsweise 622 Mbps also von 1.6 ns Dauer. Für die genannten Werte von M (18 ps/km/nm) und Δλ (0.1 nm) beträgt die maximale Reichweite infolge der Wellenleiterdispersion ungefähr 500km, weil die Verbreiterung eines Pulses bei grösserer Leiterlänge eine halbe Bitperiode übertrifft und inakzeptable Interferenzen beim Empfänger zur Folge hat. Mit Δτ = 1/2R wird das "rate-length product" somit R·d = 1/2·M·Δλ ≈ 277 Gbit·km. Soll nun die Übertragungsdistanz d bei gleichbleibender Rate R erhöht werden, muss auf einen Laser mit kleinerer Spektralbreite ausgewichen werden.

Erfindungsgemäss wird auf den Einsatz von Lasern mit kleiner Spektralbreite verzichtet und dafür die Sendepulsdauer reduziert. Durch den Modulator wird die Breite τ eines Sendepulses so gewählt, dass erst der verbreiterte Puls beim Detektor ungefähr die Dauer einer Bitperiode 1/R aufweist. Da die Verbreiterung Δτ von der Übertragungsdistanz d abhängt, muss letztere vorgängig als Parameter dem Modulator bekannt sein. Im obigen Beispiel kann beispielsweise ein Laser mit einer Rate von 2.5 Gbps eingesetzt werden, welcher Pulse mit einer Dauer von 0.4 ns bei einer Spektralbreite von 0.1 nm zu erzeugen vermag. Sollen beim Detektor Pulse mit Bitperiodendauer ankommen, stehen somit bis zu 1.2 ns für die Pulsverbreiterung Δτ zur Verfügung, wodurch sich die Reichweite des Systems um über 150 km auf 666 km erhöht. Somit beträgt das "rate-length product" 666 km x 0.622 Gbps. Dies ist mehr als das 1,33-fache des Wertes, welcher sich mit konventioneller Taktung (Pulsbreite beim Sender = Bitperiode) ergibt. Bei einer Übertragungsdistanz von 600 km wird entsprechend eine Pulsbreite τ beim Sender von 0.52 ns gewählt. Selbstverständlich lässt sich das erfindungsgemässe Verfahren auch bei beliebigen anderen Übertragungsraten R vorteilhaft anwenden.

Obwohl auch ein asynchroner Betrieb des erfindungsgemässen Verfahrens denkbar ist, eignet sich das vorgestellte Verfahren für einen Einsatz unter SDH-Standards (Synchronous Digital Hierarchy) zur synchronen Datenübertragung. Die zugehörigen Grund-Übertragungsrate STM-1 beträgt 155.52 Mbps, Vielfache davon sind bekannt als STN-4, -16, und -64. Das erfindungsgemässe Verfahren ist auch nicht auf ein bestimmtes Codierschema zur Synchronisation (z.B. Clock encoding oder DPLL) beschränkt. Das vorgängig anhand eines NRZ-Signals erläuterte Verfahren kann sinngemäss auch auf andere Modulationsformen übertragen werden.

Durch das erfindungsgemässe Verfahren kann die dispersionsbedingte Reichweitenlimitierung entschärft werden. Weitere Vorteile liegen darin, dass kostengünstigere Lichtquellen (Laserdioden) eingesetzt werden könnnen. Weiter ist beim Detektor das Verhältnis zwischen ankommenden "1"-Bits und "0"-Bits ungefähr gleich 1, wodurch die Anforderungen an die Empfindlichkeit des Empfängers reduziert werden und auch in diesem Bereich Einsparungen möglich sind. Dank dem erfindungsgemässen Verfahren lässt ein Gbit-Ethernet über grosse Distanzen mit akzeptablem Aufwand realisieren.

### BEZUGSZEICHENLISTE

- 1: Sender
- 10: Modulator
- 11: Lichtquelle, Laserdiode
- 2: Empfänger
- 20: Lichtdetektor, Photodiode
- 3: Lichtwellenleiter
- DATA: Bitfolge
- TxC: Taktgeber des Senders
- TxD: Pulsfolge beim Sender
- RxD: Pulsfolge beim Empfänger
- τ: Sendepulsbreite
- Δτ: Pulsverbreiterung
- R: Übertragungsrate
- d: Übertragungsdistanz

## Patentansprüche

1. Verfahren zur Übertragung binärer Daten mit einer Rate von R Bits pro Sekunde über einen dispersiven Lichtwellenleiter (3) der Länge d zwischen einem Sender (1) und einem Empfänger (2), wobei
a) der Sender (1) eine Lichtquelle (11) umfasst, welche optische Pulse mit einer Sendepulsbreite τ erzeugt,
b) die Pulse durch den Lichtwellenleiter (3) zum Empfänger (2) geleitet werden und sich dabei infolge einer dispersiven Eigenschaft des Lichtwellenleiters (3) um einen Wert Δτ verbreitern
c) der Empfänger einen Lichtdetektor umfasst, bei welchem die optischen Pulse mit einer Empfangspulsbreite τ+Δτ ankommen,
**dadurch gekennzeichnet**, dass
d) die Sendepulsbreite τ kleiner als eine Bitperiode 1/R ist und die Empfangspulsbreite τ+Δτ annähernd gleich einer Bitperiode 1/R ist.

2. Verfahren nach Anspruch 1, **dadurch gekennzeichnet**, dass die Sendepulsbreite τ als Funktion der Übertragungsdistanz d gewählt wird.

3. Verfahren nach Anspruch 1, **dadurch gekennzeichnet**, dass eine Folge von Pulsen beim Empfänger (2) zumindest annäherungsweise ein NRZ-Signal darstellt.

4. Verfahren nach Anspruch 1, **dadurch gekennzeichnet**, dass die Distanz d mehr als 500km beträgt.

5. Verfahren nach Anspruch 1, **dadurch gekennzeichnet**, dass es zur synchronen Datenübertragung eingesetzt wird.
